# EUROPEAN PATENT SPECIFICATION

(11) **EP 0 883 944 B1**
(45) Date of publication and mention of the grant of the patent: **16.10.2002**
(21) Application number: 96924225.4
(22) Date of filing: 10.07.1996
(51) Int. Cl.: H04L 5/06

(54) **PROCEDURE TO SUPPRESS NEAR-END CROSSTALK AT BIDIRECTIONAL COMMUNICATION IN A WIRE NETWORK**
VERFAHREN ZUR UNTERDRÜCKUNG VON NAHEM ÜBERSPRECHEN BEI BIDIREKTIONALER ÜBERTRAGUNG IN EINEM LEITUNGSNETZWERK
PROCEDE DE SUPPRESSION DE PARADIAPHONIE DANS UN RESEAU FILAIRE DE TRANSMISSION BIDIRECTIONNELLE

(30) Priority: 04.08.1995 SE 9502775
(43) Date of publication of application: 16.12.1998
(73) Proprietor: STMicroelectronics N.V., 1077 XX Amsterdam (NL)
(72) Inventor: ISAKSSON, Mikael, S-973 42 Lulea (SE)
(74) Representative: Akerman, Marten Lennart
(86) International application number: SE9600935
(87) International publication number: WO97006619

(56) References cited:
- EP-A- 0 616 445
- IEEE TRANSACTIONS ON BROADCASTING, Volume 41, No. 1, March 1995, WILLIAM Y. ZOU et al., "COFDM: An Overview", pages 1-6.
- IEEE TRANSACTIONS ON COMMUNICATIONS, Volume 33, No. 7, July 1985, LEONARD J. CIMINI, Jr., "Analysis and Simulation of a Digital Mobile Channel Using Orthogonal Frequency Division Multiplexing", pages 665-675.

## Description

### TECHNICAL FIELD

The present invention relates to a procedure to suppress near-end crosstalk at bidirectional communication in wire networks. The invention makes possible to suppress near-end crosstalk and echoes at broadband communication over copper cable in an access network by utilizing the transmission technology Discrete Multi Tone (DMT).

DMT is a transmission technology or line coding technology for wire-based tele- and data communication networks and is fundamentally the same technology as OFDM (Orthogonal Frequency Division Multiplexing), which is the corresponding method for the technology in connection with radio.

### PRIOR ART

A problem with the technology of today is that it is considerably easier to develop technology for asymmetric communication in access networks than technology for symmetric communication. This is due to that disturbances in the form of near-end crosstalk arise between adjacent copper pairs in the same copper cable if the same frequency is utilized in both transmission directions. At asymmetric communication a broadband information is transmitted from the fixed network to the subscriber, whereas a considerably lower capacity can be transmitted from the subscriber to the network. For services which require broadband transmission in both directions it is however difficult and complicated to attain a sufficient transmission capacity via the copper cable network.

One aim with the present invention is among other things to solve the above presented problem and provide a procedure which allows a more equalized distribution of the transmission capacity of the copper network by suppressing near-end crosstalk at broadband communication in a coppercable based access network.

USA 5 241 538 can be regarded to represent the most closely related technology. The document relates to reduction of crosstalk. A crosstalk reduction circuit produces from a main signal a crosstalk correction signal of the same amplitude as the crosstalk from the main signal to a subsignal, but with reversed phase. The correction signal is added to the subsignal. A first modulation circuit modulates a subcarrier by an output signal from the crosstalk reduction circuit. A frequency multiplexor circuit frequency-multiplexes the main signal and the modulated subcarrier to make a frequency-multiplexed signal. A second modulation circuit frequency-modulates a main carrier by the frequency-multiplexed signal to make a frequency-modulated signal. The frequency-modulated signal is transmitted through the transmission line. This document does not mention use of orthogonal subcarriers by utilizing DMT-technology.

The article "IEEE Transactions on Broadcasting, Vol. 41, No. 1, March 1995 - COFDM: An Overview" by William Y. Zou and Yiyan Wu, discloses an overview of OFDM and COFDM. COFDM may be regarded as the method corresponding to DMT in connection with radio. Even though the article mentions that OFDM has been exploited for e.g. digital subscriber lines, and the document is specific in other respects, the article is silent about suppressing crosstalk in wire networks, i.e. between copper pairs in a cable. Neither does the article mention the possibility of using different carriers in different directions.

EP-A1-0 616 445 discloses a radio communication system utilising COFDM. Orthogonal carriers are used in two different transmission directions, wherein the coding may be different in the two directions. The document fails to disclose the utilisation of DMT in wire networks for suppressing near-end crosstalk between copper pairs in a cable, but is only concerned with radiocommunication.

The present invention solves the above mentioned problem by utilizing DMT-technology as transmission technology. The possibility of the DMT-technology to frequency-multiplex the information orthogonally in the frequency plane is utilized. By distributing subcarriers on the two transmission directions, the near-end crosstalk can be suppressed, which results in that more information can be transmitted per subcarrier.

### SUMMARY OF THE INVENTION

The present invention consequently provides a procedure to suppress near-end crosstalk at bidirectional communication in wire networks, including a cable between a first side and a second side. The cable includes at least one wire pair for telecommunication.

According to the invention, different carriers are used in the two transmission directions, and the subcarriers are orthogonal. The number of subcarriers in each transmission direction can be chosen either so that an asymmetric or a symmetric system is obtained.

Discrete Multitone Technology, DMT, with guard space between symbols is utilized. Transmitters on both sides should be time synchronized within a guard space interval.

The invention is defined in details in enclosed claims.

### BRIEF DESCRIPTION OF THE DRAWINGS

A preferred embodiment of the invention will after this be described in detail with reference to enclosed drawings, in which
Figure 1 is a block diagram over the access network in telecommunication system,
Figure 2 is a diagram over the time structure for the DMT-technology,
Figure 3 is a diagram over orthogonal carriers in the frequency plane for the DMT-technology,
Figure 4 illustrates near-end crosstalk and far-end crosstalk between wire-pairs in a copper cable,
Figure 5 is a diagram over attenuation, near-end crosstalk and far-end crosstalk as function of the frequency,
Figure 6 illustrates margins for orthogonality at the DMT-technology,
Figure 7 is a diagram which illustrates examples of distribution of subcarriers according to the present invention, and
Figure 8 shows schematically the crosstalk situation in the fixed side and the subscriber side in a telecommunication network.

### DETAILED DESCRIPTION OF THE INVENTION

The present invention relates to a general procedure to suppress near-end crosstalk and echoes in systems for broadband communication over copper cable by utilizing DMT line coding technology. The invention can be utilized to increase the capacity at symmetric communication, i.e. the same transmission capacity in both directions, to and from subscriber. The invention replaces functions such as echo cancellers and crosstalk cancellers.

DMT stands for "Discrete Multitone" and is a transmission technology, or line coding technology, for wirebased networks. DMT is basically the same technology as OFDM (Orthogonal Frequency Division Multiplexing), which is a term which is used in radio connections.

It has proved to be considerably easier to develop technolgy for asymmetric communication (ADSL) in the access network than technology for symmetric communication (HDSL). The reason is that disturbances in the form of Near End CrossTalk (NEXT) arise between adjacent copper pairs in the same copper cable, if the same frequency band is used in both transmission directions. At asymmetric communication a broadband information is transmitted from the fixed network to the subscriber, whereas a considerably lower capacity can be transmitted from the subscriber to the network, at which the problem with the ner-end crosstalk is reduced.

The ADSL-technology is suitable for services of type "Video on Demand", distance education, games etc, which only need broadband transmission in one direction. For services which require broadband transmission in both directions, type video conferences and data communication, it is difficult and complicated to attain a sufficient capacity via the copper network.

The present network is based on a concept which contributes to a more "solidary" distribution of the transmission capacity of the copper network by utilizing the possibilities of the DMT-technology to frequency-multiplex the information orthogonally in the frequency plane. By distributing the subcarriers on the two transmission directions the near-end crosstalk can be suppressed, which results in that more information can be transmitted per subcarrier. The invention requires a comparatively good time synchronization in the access network, and sufficiently large guard spaces within a signal interval.

In order to facilitate the understanding of the invention is after this a general description of a typical access network in a telecommunication system and of the DMT-technology given.

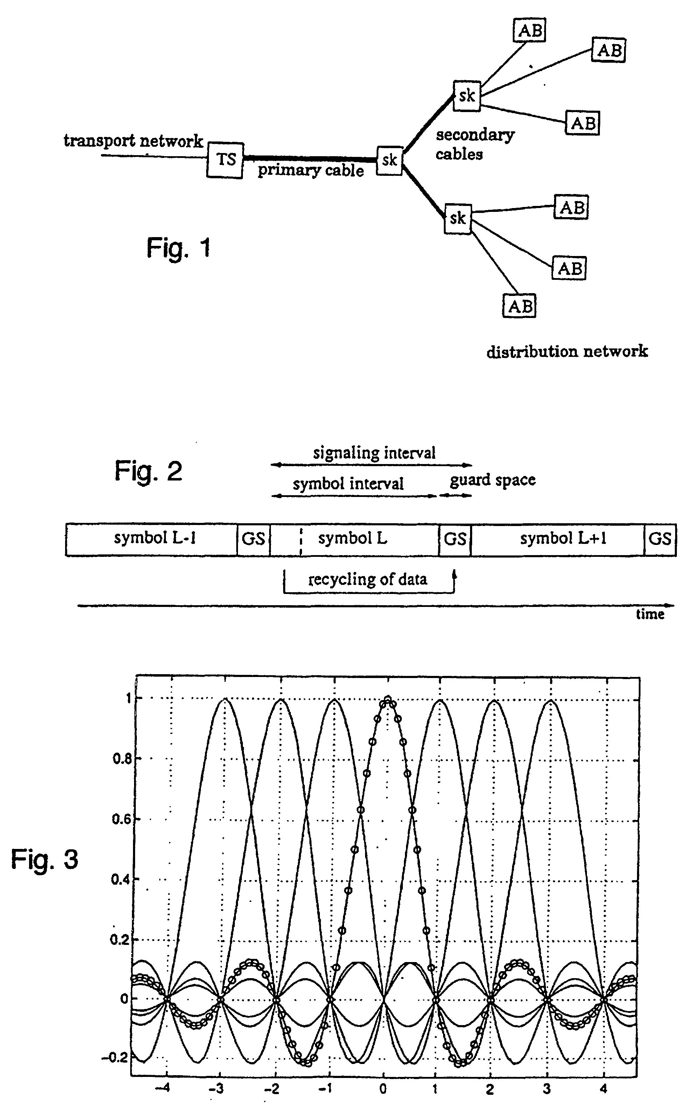

In Figure 1 is shown an access network. The access network consists in principle exclusively of twisted copper pairs between the telephone exchange/station (TS) and the subscribers (AB). The topology is of star structure.

From the telephone exchange TS come primary cables containing from a few hundred up to several thousand pair cables; one unique pair of copper to each subscriber AB. The primary cable after that is split in cabinets (SK) into secondary cables, which after that are split into the so called distribution network, closest to the subscribers. The telephone cables in the distribution network most often contain between 5 and 100 copper pairs.

The DMT-technology will now be explained with reference to Fig.2.

In most existing systems based on DMT/OFDM a guard space is utilized between the symbols. The guard space has the task of absorbing the time dispersion between two following symbols, and to allow a certain time variation at the sampling of the symbol. If a 1024 points FFT (Fast Fourier Transform) is utilized, the symbol is sampled 1024 times. The number of samples for the guard space can be between 0 and 1/4 of the FFT-length.

The guard space is filled up in the time domain by repeated data, i.e. the first part of the symbol. Since the FFT-operation is cyclic, this makes that the starting point for sampling of the symbol can be varied within the signal interval, i.e. the symbol time plus the guard space, without information being lost. This can also be expressed as that the symbols keep their orthogonality between them in the frequency plane.

If, on the contrary, the sampling is made over the joint between two symbols, the orthogonality is destroyed and the possibility for symbol detection.

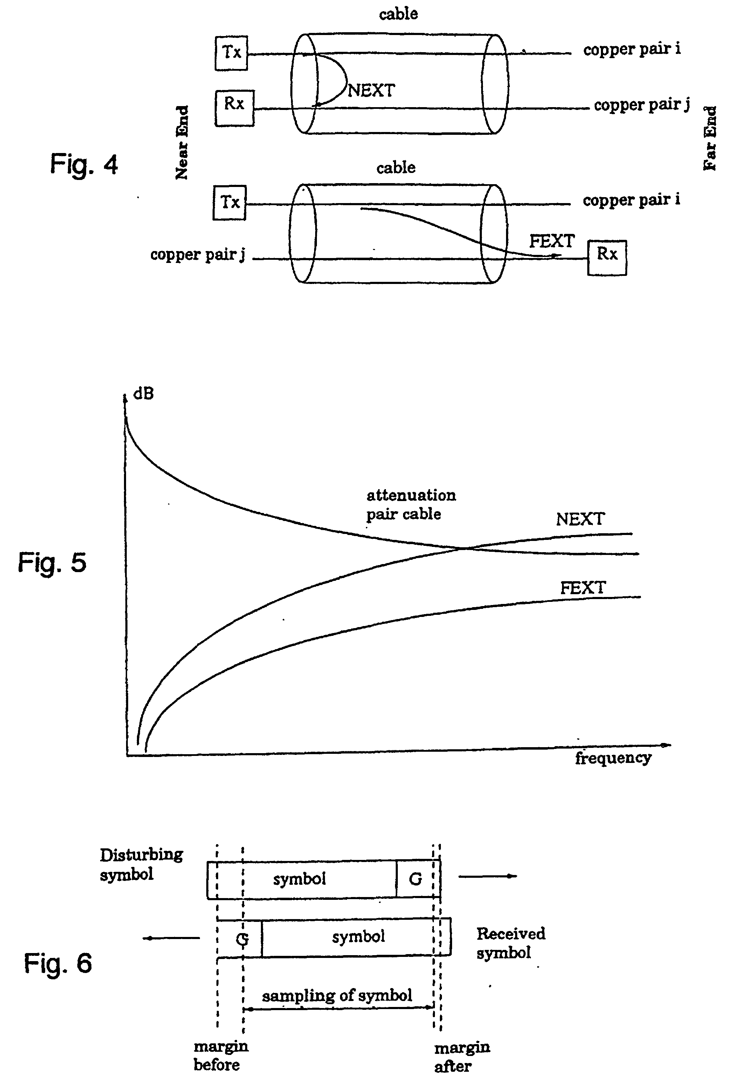

This gives a condition of the procedure according to the invention, as is explained more in detail with reference to Figure 6.

The orthogonality of the different subcarriers in the frequency plane is shown in Figure 3. A subcarrier has been marked by circles for the sake of clarity.

The orthogonality is obtained by the spectrum form of each subcarrier following a sin(x)/x-function, or sinc-function. Each subcarrier has a maximum and zero-passings where other channels have maxima.

If the sampling to the FFT-operation in the receiver is not made whithin the signal interval, the orthogonality is destroyed, i.e. the condition for zero-passings is not fulfilled, which makes detection of the symbols impossible.

Figure 4 illustrates crosstalk between copper wire pairs in a cable. What in the first hand restricts the data transmission over copper cable is crosstalk from adjacent copper pairs within the same cable, in combination with that the received signal is strongly attenuated. There are two different cases of crosstalk; Near End Cross Talk (NEXT) and Far End Cross Talk (FEXT).

Near-end crosstalk is considerably more serious than the far-end crosstalk. The reason is that the received signal in the receiver Rx is strongly attenuated due to the length of the cable, which results in that the crosstalk from the transmitter Tx becomes strong in relation to the level of the received signal. This also can be expressed as that the Signal Interference Ratio (SIR) becomes low. Far-end crosstalk arise from signals in adjacent copper pairs with the same transmission direction as the signal the receiver Rx receives. This makes that the far-end crosstalk is attenuated to the same extent as the signal when it propagates through the cable, and the signal/interference ratio becomes considerably higher than for the near-end crosstalk. If the two transmission directions are in separate frequency-bands, the near-end crosstalk can be avoided, which one utilizes within asymmetric communication.

The total crosstalk which arises is of course the sum of crosstalk from all copper pairs within the same cable.

Both near- and far-end crosstalk are increasing functions of the frequency as is shown in Figure 5. The attenuation characteristic of the pair cable is also included in the same diagram. The distance (Carrier Interference Ratio, CIR), or the area, between the attenuation curve and the crosstalk curves is a measure of how high transmission capacity that can be achieved.

If near-end crosstalk is the dominating type of disturbance, a considerably lower transmission capacity is obtained when far-end crosstalk dominates.

CIR, i.e. the distance between the attenuation curve and the crosstalk curves rapidly decreases for higher frequencies. This is utilized in the DMT-technology in that way that for subcarriers at low frequencies and with high CIR more bits/symbol are transmitted than for subcarriers at high frequencies and low CIR. The technology is called "bit-loading". If far-end crosstalk dominates, considerably more bits can be transmitted per symbol than if near-end crosstalk dominates.

The idea of the invention is based on the following conditions:
Condition 1. All transmitters in the access network, both on the subscriber side and in the telephone exchange, are time synchronized within a guard space interval.
   The condition implies that the near-end crosstalk always is orthogonal with the received signal. This is illustrated in Figure 6. The sampling interval of the received symbol is within the signal interval of all symbols that are transmitted in opposite direction. The margins for that the orthogonality conditions shall be met with before and after the sampling interval are indicated in the figure.
Condition 2. Different subcarriers are used for the two transmission directions.

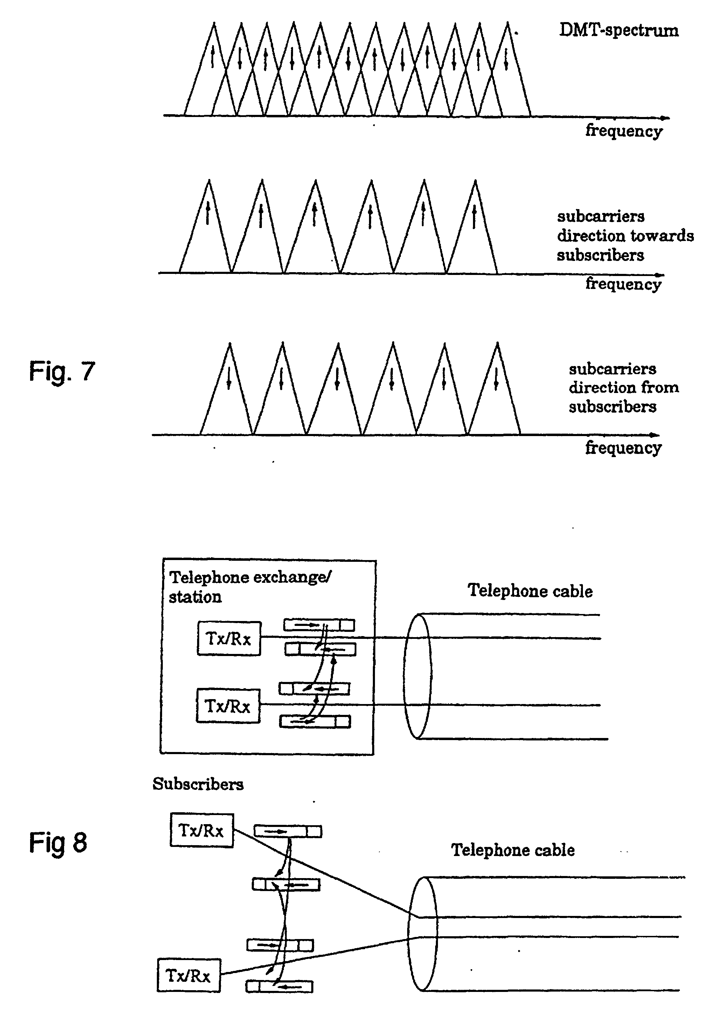

The condition implies that all near-end crosstalk have zero-places in the subcarriers which contain information in the received signal. This is illustrated in Figure 7.

At the top in Figure 7 is shown all utilized subcarriers where the spectrum form for the sinc-function has been approximated with a triangle. The directions of the arrows symbolize the transmission direction for the different subcarriers.

In the Figure 12 subcarriers are utilized, 6 in each transmission direction. The example is chosen so that every other carrier is utilized in the upward direction (from subscriber to telephone exchange), and every other is utilized in the downward direction. This choice is not a requirement for the method according to the invention, but the requirement is that different carriers are utilized. The method also allows that the number of carriers which are utilized in the two transmission directions can vary, which gives asymmetric communication.

At perfect synchronization the CIR-margin for each received symbol (subcarrier) is decided by the far-end crosstalk curve in Figure 5, instead of by the near-end crosstalk curve, which gives considerably higher transmission capacity per subcarrier.

In Figure 8 is shown a sketch of a how incoming symbols are disturbed by outgoing, on the one hand at the telephone exchange, and at the other at the subscriber. The time synchronization at the telephone exchange is easy to achieve, because all hardware for transmission over all copper pairs is collected. The time synchronization on the subscriber side is a bit more difficult, because time synchronization is made on physically separate places, and that the different coppar pairs have different lenghts.

The time synchronization can be achieved in different ways, as is realized by an expert in the field. The invention is only restricted by the following patent claims.

## Claims

1. Procedure to reduce near-end crosstalk at bidirectional communication in wire networks, including a cable between a first side and a second side, which cable includes at least one pair of wires for telecommunication, **characterised in that** different, orthogonal carriers are used in the two transmission directions, and **in that** the transmission utilises discrete multitone technology DMT with guard space between symbols, the transmitters on both sides being synchronised within a guard space interval.

2. Procedure according to claim 1, **characterized in that** a number of subcarriers are transmitted in each transmission direction, at which every other subcarrier is utilized in respective direction.

3. Procedure according to claim 1, **characterized in that** a number of subcarriers are utilized, at which the number of carriers which are utilized in one transmission direction is larger than in the other transmission direction.

4. Procedure according to any of the previous claims, **characterized in that** the spectrum form for each subcarrier follows a function sin(x)/x, and each subcarrier has a maximum and zero-passings where other subcarriers have maxima.

5. Procedure according to any of the previous claims, **characterized in that** the first side is at a telephone exchange (TS) and the other side is the subscriber side (AB).

## Patentansprüche

1. Verfahren zum Reduzieren von nahem Übersprechen bei bidirektionaler Kommunikation in einem Leitungsnetzwerk, das ein Kabel zwischen einer ersten Seite und einer zweiten Seite umfaßt, welches Kabel mindestens ein Paar von Adern für Telekommunikation enthält, **dadurch gekennzeichnet, daß** verschiedene, orthogonale Träger in den beiden Übertragungsrichtungen benutzt werden, und daß die Übertragung mit diskreter Multiton-Technologie DMT arbeitet mit einem Schutzabstand zwischen Symbolen, wobei die Sender auf beiden Seiten innerhalb eines Schutzabstand-Intervalls synchronisiert sind.

2. Verfahren nach Anspruch 1,
**dadurch gekennzeichnet, daß** eine Anzahl von Subträgern in jeder Übertragungsrichtung übertragen werden, wobei jeder zweite Subträger in der jeweiligen Richtung verwendet wird.

3. Verfahren nach Anspruch 1,
**dadurch gekennzeichnet, daß** eine Anzahl von Subträgern verwendet werden, wobei die Anzahl von in der einen Übertragungsrichtung verwendeten Trägern größer als in der anderen Übertragungsrichtung ist.

4. Verfahren nach einem der vorangehenden Ansprüche,
**dadurch gekennzeichnet, daß** die Spektrumform für jeden Subträger einer Funktion sin(x)/x folgt und daß jeder Subträger ein Maximum und Nulldurchgänge dort hat, wo andere Subträger Maxima haben.

5. Verfahren nach einem der vorangehenden Ansprüche,
**dadurch gekennzeichnet, daß** die erste Seite bei einer Telefonvermittlung (TS) und die andere Seite die Teilnehmerseite (AB) ist.

## Revendications

1. Procédé de réduction de paradiaphonie dans des réseaux filaires de transmission bidirectionnelle, comprenant un câble entre un premier côté et un second côté, lequel câble comprend au moins une paire de fils pour la télécommunication, **caractérisé en ce que** différentes porteuses orthogonales sont utilisées dans les deux directions de transmission, et **en ce que** la transmission utilise la technologie DMT (discrete multitone technology) avec un espace de garde entre les symboles, les émetteurs sur les deux côtés étant synchronisés à l'intérieur d'un intervalle de garde.

2. Procédé selon la revendication 1, **caractérisé en ce qu'**un certain nombre de sous-porteuses sont transmises dans chaque direction de transmission, dans lequel une sous-porteuse sur deux est utilisée dans la direction respective.

3. Procédé selon la revendication 1, **caractérisé en ce qu'**un certain nombre de sous-porteuses sont utilisées, dans lequel le nombre de porteuses utilisées dans une direction de transmission est supérieur au nombre de porteuses utilisées dans l'autre direction de transmission.

4. Procédé selon l'une quelconque des revendications précédentes, **caractérisé en ce que** le spectre pour chaque sous-porteuse prend la forme d'une fonction sin (x)/x, et chaque sous-porteuse possède un maximum et des passages par zéro où d'autres sous-porteuses possèdent des maxima.

5. Procédé selon l'une quelconque des revendications précédentes, **caractérisé en ce que** le premier côté se situe à une centrale téléphonique (TS) et l'autre côté est le côté abonné (AB).
